# EUROPEAN PATENT SPECIFICATION

(11) **EP 4 088 167 B1**
(45) Date of publication and mention of the grant of the patent: **29.11.2023**
(21) Application number: 20701667.6
(22) Date of filing: 07.01.2020
(51) Int. Cl.: A45C 11/00, A45C 13/02, A45C 11/24, G06F 1/16, G02B 27/01, H02J 7/00, H04M 1/04, G06F 3/01

(54) **A VIRTUAL REALITY OR AUGMENTED REALITY HEADSET ACCESSORY FOR FACILITATING CONTROLLED VIEWING EXPERIENCES IN MOBILE ENVIRONMENTS**
KOPFHÖRERZUBEHÖR DER VIRTUELLEN REALITÄT ODER ERWEITERTEN REALITÄT ZUR ERLEICHTERUNG DER KONTROLLIERTEN BETRACHTUNG IN MOBILEN UMGEBUNGEN
ACCESSOIRE DE CASQUE DE RÉALITÉ VIRTUELLE OU DE RÉALITÉ AUGMENTÉE POUR FACILITER DES EXPÉRIENCES DE VISUALISATION CONTRÔLÉES DANS DES ENVIRONNEMENTS MOBILES

(43) Date of publication of application: 16.11.2022
(73) Proprietor: Eden Immersive Limited, Fairview, Clontarf Dublin 3 (IE)
(72) Inventor: WHITE, Derek Brian, 2193 Johannesburg (ZA)
(74) Representative: Carroll, Christopher P.
(86) International application number: PCT/IB2020/050092
(87) International publication number: WO 2021/140356

(56) References cited:
- WO-A1-2019/013808
- WO-A1-2019/023055
- US-A1- 2018 067 547
- US-A1- 2019 272 800
- US-B1- 9 298 283

## Description

### FIELD OF THE INVENTION

The invention relates to a virtual reality or augmented reality headset accessory for facilitating controlled viewing experiences in mobile environments.

### BACKGROUND

In recent years, the availability and functionality of virtual reality or augmented reality headsets (collectively refer to herein as "VR headsets") has increased. This increase in availability and functionality has led to an increase in use of these VR headsets. For example, while these VR headsets were once limited to enclaves of video game providers and gaming communities, these VR headsets now have a wider following. WO 2019/023055A1 discloses a carrying case that comprises at least one processing device having a processor coupled to a memory, at least one network interface, and a housing having at least one compartment, such that the at least one compartment has at least one mount configured for attachment of one or more devices utilized in physiologic monitoring of a subject. US 2018/067547A1 describes a virtual reality headset helmet adaptor that retains a virtual reality headset against the face of a user when the user wears a helmet and the virtual reality headset. The adaptor is configured to be operated by the user to tighten the virtual reality headset against the face of the user. The system also facilitates selection of a virtual reality motion experience for presentation to the user via the virtual reality headset, and control commands related to starting and/or stopping such a presentation. WO2019/013808A1 describes a virtual reality headset stand that includes a base, a stem, and a docking station. The stem, which extends from the base, is angled toward the base. The docking station, which is attached to the stem, is angled away from the stem. The docking station is contoured to hold a virtual reality headset. The docking station includes a lip connected to the stem, a body portion connected to the lip, and a clip connected to the body portion. US 9298283B1 discloses method and devices for creating a sedentary virtual-reality system are provided. A user interface is provided that allows for the intuitive navigation of the sedentary virtual-reality system based on the position of the users head. The sedentary virtual-reality system can render a desktop computing environment. The user can switch the virtual-reality system into an augmented reality viewing mode or a real-world viewing mode. US 2019/272800A1 describes a portable compute case for eyewear devices may include a wireless transceiver and a computation component that includes at least one processor. The portable compute case may be configured to house an eyewear device; establish, using the wireless transceiver, a communicative connection between the portable compute case and the eyewear device; generate, using the computation component, processed sensor data; and transmit, using the wireless transceiver, the processed sensor data to the eyewear device for display by the eyewear device. Various other systems and methods are also disclosed.

### SUMMARY

The invention is as defined in the appended set of claims. Despite a wider following, the primary use of VR headsets remains in an at-home or private setting as conventional VR headsets are ill-suited for a mobile and/or communal use environment. For example, VR headsets typically enclose both eyes of a user, so that only the image on the screen generated by the headset is viewable to the user. As other users do not have a means through which to monitor, control, or enjoy the VR headset user's experience, VR headsets lack appeal in a multi-user, public setting. This is particularly true for uses of VR headsets in which a first user (e.g., an operator or host) wishes to control the viewing experience of a second user (e.g., a person wearing the VR headset). For example, if the first user wishes to select the content displayed and/or create a custom experience for the second user, the first user needs to be able to monitor and/or control the content displayed. However, as the VR headsets require the second user's eyes to be enclosed, there is no way for the first user to monitor the content displayed on the VR headset.

Moreover, in order to enclose the eyes of the user, VR headsets are also normally larger (and thus heavy and bulkier) than other mobile devices, which makes transportation more difficult. VR headsets also consume large amounts of power, which makes powering these headsets using batteries mounted in the VR headsets for long periods of use impractical. The large amounts of power are typically used both to render the environment displayed to the user as well as to power external cameras and gyroscopic components in order to respond to head movements of the user. Finally, incorporating additional components into the VR headsets only exacerbates the weight and battery power issues discussed above. For example, additional computer components to provide wireless capabilities, in particular over digital cellular networks, for distributing content and performing maintenance to one or more devices, or external displays on the VR headset to allow other users to view and/or control experiences of the VR headset would add weight and require more battery power.

In view of this, the methods and systems described herein relate to an improved VR headset accessory, and in particular, a specialized case for carrying the VR headset that works in a client/server architecture with the accessory. In particular, accessory acts as a thick client device, in the client/server architecture, to support the VR headset, which acts as a thin client device, in the client server architecture. That is, the specialized case has advanced features and functionality that facilitates portable maintenance and usage of the VR headset in mobile environments. For example, in order to overcome the problems discussed above, the accessory houses additional batteries and/or power source connections such that the VR headset may be charged while in the accessory. By moving the additional power sources and/or connections to the accessory, the VR headset may be charged while in transit, but the head of the user does not need to support the additional power sources while the VR headset is in use. This facilitates the charging of the accessory which includes a power management component that provides and manages power to the VR headset and/or other system components.

Additionally, the VR headset is linked to an ancillary device (e.g., a laptop, mobile phone, and/or tablet computer) such that other users may monitor, control, and/or enjoy the VR headsets user's experience. The ancillary device is linked through wireless means and include an input interface that differs, both in look-and-feel and type of interaction, from that experienced by the user in order to account for the differences in which users interact with the VR headset as opposed to the ancillary device. For example, the VR headset may respond to voice activated commands or commands generated from a remote control whereas the ancillary device (e.g., a tablet computer) may respond to touchscreen commands. Similarly, the VR headset may feature a heads-up display with nested menus and on-screen options as inputting alpha-numeric characters is difficult whereas the ancillary device (e.g., a tablet computer) may feature search bars and on-screen keyboards. Alternatively, the ancillary device may control the content displayed on the VR headset negating the need for menus in the VR headset. Notably, while the input interface between the VR headset and ancillary device may differ, both in look-and-feel and type of interaction (or the VR headset may lack an input interface entirely), the substantive content may be the same; thus, facilitating communal or controlled viewing experiences in the mobile environment.

Beyond addressing concerns about weight and battery power, the system may include additional features to facilitate portable maintenance and usage that may facilitate for controlled viewing experiences in mobile environments. For example, in order for the VR headset and ancillary device to provide a controlled viewing experience, the system needs a means through which content is shared between the devices. Incorporating wireless capabilities, in particular those required for transmission over digital cellular networks, only increases the weight and power consumption of the VR headset. Accordingly, the system includes a communication component (e.g., a computational board with Wi-Fi, LTE, and/or USB-C communication capabilities) for facilitating the sharing of content of the accessory. The communication component indicates an address associated with the VR headset, ancillary device, and/or other components of the system. By using a communication component that indicates an IP address, the system may receive content downloads, maintenance, and updates that target the system (e.g., the VR headset, ancillary device, and/or other system components individually or on a group basis). Furthermore, by including an address (e.g., an IP address or MAC address) that is unique to each system (or another unique system identifier), individual content can be delivered to the system and individual diagnostics may be performed on the system. In addition to reducing the weight of the VR headset, positioning the communication component in the accessory allows for the communication component to use a power source located in the accessory.

With the communication component located in the accessory and using a power source also located in the accessory, the communication component can feature more processing power and use more-power intensive communication methods. This is particularly useful for VR headset content, which is data intensive and requires large amounts of data, and for receiving content from remote servers through the use of digital cellular networks. Accordingly, data may be downloaded and/or uploaded using these means from the communication component in the accessory, with the content being shared between the accessory and VR headset and/or ancillary device through less processing intensive communication methods (e.g., through short range wireless connections and thick/thin client-server arrangements, and/or through wired connections while the VR headset and ancillary device are stored in the accessory).

The system may also include a handle attachment that may be connected to the VR headset to allow a user of the VR headset to hold the VR headset while in use. For example, to ensure a proper fit, and support the weight of VR headsets, conventional VR headsets may include straps or an adjustable rigid device that extends over the head of a user. While straps are effective at supporting the weight of the headsets and enclosing the eyes of a user to create an immersive experience, strap mechanisms raise hygienic concerns when the headsets are shared among multiple users. This is particularly true of commercial uses of virtual reality or augmented reality headsets in which headsets may be used by numerous users, each for a brief time, and in a public setting. Due to the hygienic concerns, potential users may shy away from headsets that require a user to strap the headset to his or her head. Accordingly, the system provides a removable handle attachment that allows user to use the VR headset without raising hygienic concerns. This handle attachment may be removable from the VR headset in order to facilitate easier transportation and a more compact accessory.

Finally, in order to facilitate the movement of the delicate VR headset, ancillary device, and/or other components, the accessory includes a molded internal structure (e.g., a concave interior surface) that both provides protection as well as intuitive design for arranging the VR headset, ancillary device, and/or other components in a manner to ensure that the components are protected and/or properly arranged for charging, data sharing, and/or limiting the bulkiness of the accessory. The accessory functions in both an open and closed state and/or may include one or more mechanisms for securing the accessory in the open or closed state. The accessory may also include lightweight material (e.g., the concave interior surface) surrounded by a hard exterior (e.g., an exterior housing) to lower overall weight. The communication component may further be positioned between the exterior housing and the interior surface to protect the communication component from both exterior damage (e.g., damage from dropping the accessory) and interior damage (e.g., damage caused by a user transferring the VR headset in and out of the accessory).

Various other aspects, features, and advantages will be apparent through the detailed description and the drawings attached hereto. It is also to be understood that both the foregoing general description and the following detailed description are examples and not restrictive of the scope of the invention. As used in the specification and in the claims, the singular forms of "a," "an," and "the" include plural referents unless the context clearly dictates otherwise. In addition, as used in the specification and the claims, the term "or" means "and/or" unless the context clearly dictates otherwise. Additionally, as used in the specification "a portion," refers to a sub-part of, or the entirety of, a given item unless the context clearly dictates otherwise.

### BRIEF DESCRIPTION OF THE DRAWINGS

FIG. 1 shows an accessory for a virtual reality or augmented reality headset currently in a closed state, in accordance with one or more embodiments.
FIG. 2 shows an accessory for a virtual reality or augmented reality headset currently in a closed state, in accordance with one or more embodiments.
FIG. 3 shows an accessory for a virtual reality or augmented reality headset currently in a partially open state, in accordance with one or more embodiments.
FIG. 4 shows an accessory for a virtual reality or augmented reality headset currently in a partially open state, in accordance with one or more embodiments.
FIG. 5 shows a hand-held VR headset which may be stored in the accessory, in accordance with one or more embodiments.
FIG. 6 shows a diagram featuring the various system components, in accordance with one or more embodiments.
FIG. 7 shows a flow chart of steps in an illustrative method of sharing content between devices, in accordance with one or more embodiments.
FIG. 8 shows a flow chart of steps in another illustrative method of facilitating a controlled viewing experience, in accordance with one or more embodiments.
FIG. 9 shows another hand-held VR headset which may be stored in the accessory, in accordance with one or more embodiments.
FIG. 10 shows a portable stand for holding a hand-held VR headset, in accordance with one or more embodiments.

### DETAILED DESCRIPTION OF THE DRAWINGS

In the following description, for the purposes of explanation, numerous specific details are set forth in order to provide an understanding of example embodiments. It will be appreciated, however, by those having skill in the art that embodiments may be practiced without these specific details or with an equivalent arrangement.

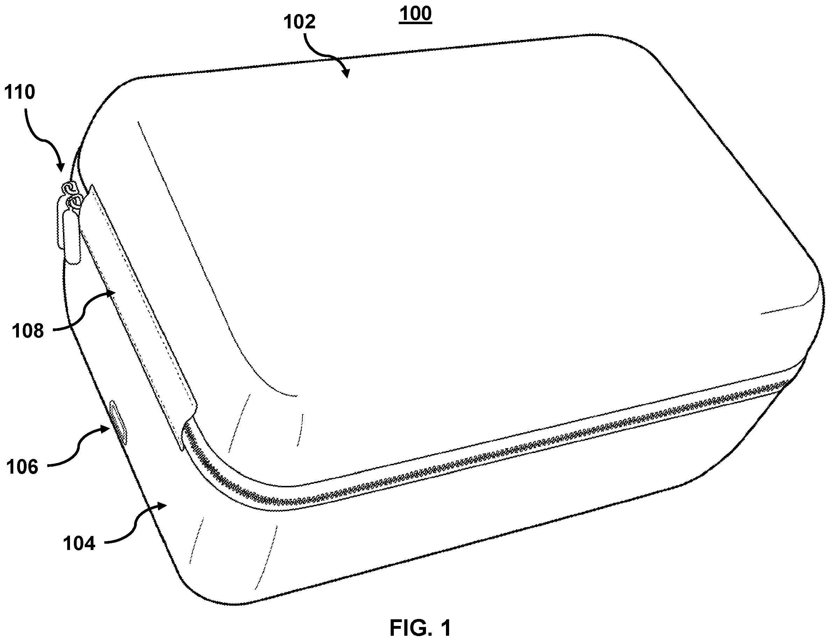

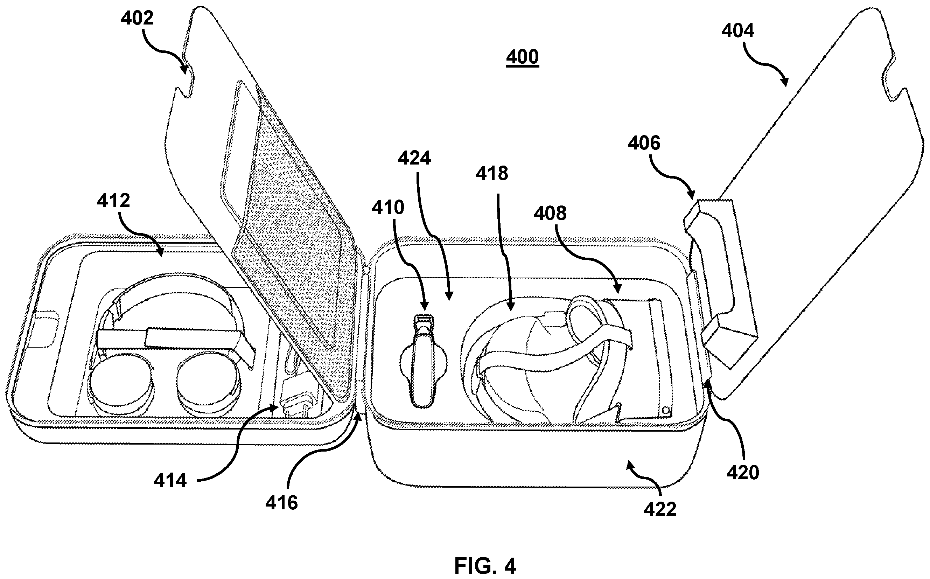

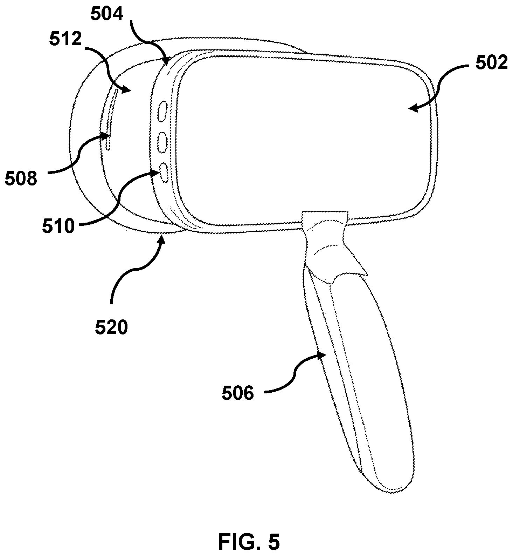

FIG. 1 shows an accessory for a virtual reality or augmented reality headset currently in a closed state, in accordance with one or more embodiments. For example, accessory 100 may contain a virtual reality or augmented reality headset (e.g., as discussed below in FIG. 5, a headset with cold-shoe to clip-on a handle contained within the accessory). Accessory 100 may correspond to accessory 400 (FIG. 4) when accessory 400 (FIG. 4) is in a closed state.

Accessory 100 includes top portion 102 and bottom portion 104. As shown in FIG. 1, top portion 102 and bottom portion 104 are shown as rectangular. It should be noted however that in some embodiments top portion 102 and bottom portion 104 may have any shape. In some embodiments, top portion 102 and bottom portion 104 may have a changing shape. For example, top portion 102 and bottom portion 104 may be elastic, inflatable, form fitting, and/or adjustable. Accordingly, accessory 100 (and top portion 102 and bottom portion 104) may have variable shapes and sizes.

Top portion 102 and bottom portion 104 may comprise any suitable material. For example, top portion 102 and bottom portion 104 may be transparent (e.g., in order to allow users to view the contents), may have a material selected to reduce electronic interference, may have a material selected to provide rigid protection, and/or may have a material selected to reduce weight.

When accessory 100 is in a closed state, top portion 102 and bottom portion 104 may contact each other (at least partially) and or may be held together through element 110. Element 110 appears as a zipper in FIG. 1. It should be noted however that element 110 may include any means for securing top portion 102 to bottom portion 104. For example, in some embodiments, element 110 may include physical means of securement (e.g., buttons, levers, elastically deforming connectors) and/or may include electronic or magnetic securement means.

Accessory 100 also includes hinge 108. Hinge 108 may allow top portion 102 and bottom portion 104 to separate through axial rotation along an axis of hinge 108. It should be noted that in some embodiments, other mechanisms for allowing access to contents within accessory 100 may be used. For example, in some embodiments, top portion 102 and bottom portion 104 may separate through axial rotation perpendicular to an axis of hinge 108. In some embodiments, top portion 102 and bottom portion 104 may change from open to closed state by sliding relative to one another and/or through a pull string mechanism.

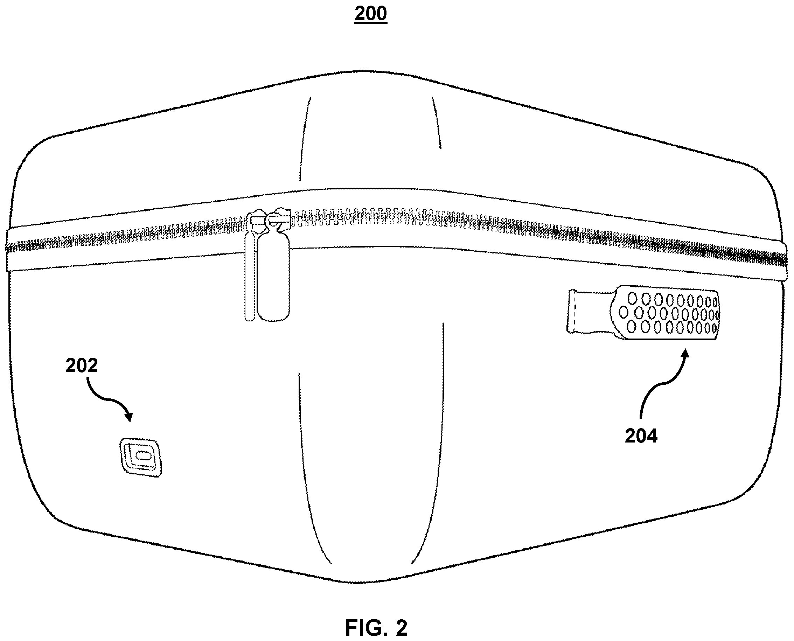

Accessory 100 may also include one or more other surface features (e.g., surface feature 106). While surface feature 106 is shown as an I/O port (as described as such in FIG. 2), it should be noted that surface features may include any feature on the surface of accessory 100. For example, a surface feature may include a button or other input mechanism and/or an I/O path (e.g., an HDMI, USB, etc. input/output). Additionally or alternatively, a surface feature may include a power supply (e.g., a port for inserting a power cable, connecting a battery, a copper pin connection) or an area used to connect to and/or facilitate a connection with an induction coil. Surface features may also include display areas (e.g., screens, digital displays, etc.) on the headset, speaker and/or audio ports, and/or camera lens or other sensors or content capture components. Surface features may also include design elements of accessory 100 such as ridges, graphics, etc. or elements used to hold or carry accessory 100.

For example, FIG. 2 shows an accessory for a virtual reality or augmented reality headset currently in a closed state, in accordance with one or more embodiments. For example, accessory 200 may contain a virtual reality or augmented reality headset (e.g., as discussed below in FIG. 5). Accessory 200 may correspond to accessory 400 (FIG. 4) when accessory 400 (FIG. 4) is in a closed state. Accessory 200 includes I/O port 202 and handle 204. I/O port 202 may provide electrical contacts and/or data transfer capabilities for accessory 200. For example, I/O port 202 may comprise of a USB-C female input. For example, as accessory 200 consumes power, a power source (e.g., battery located within accessory 200) may need to be periodically recharged. I/O port 202 may provide this function. I/O port 202 may include any socket and/or connection area into which a cable or cord is plugged and/or any transfer point for the input or output of data or power to or from accessory 200. In some embodiments, I/O port 202 may connect to any power and/or data component within accessory 200. For example, I/O port 202 may connect to a communication component, power source, and/or power management component positioned between the exterior housing of accessory 200 and the interior surface of accessory 200. It should be noted that in some embodiments, handle 204 may comprise a shoulder strap, extendable handle, pull strings, and/or other mechanism to aid in carrying accessory 200.

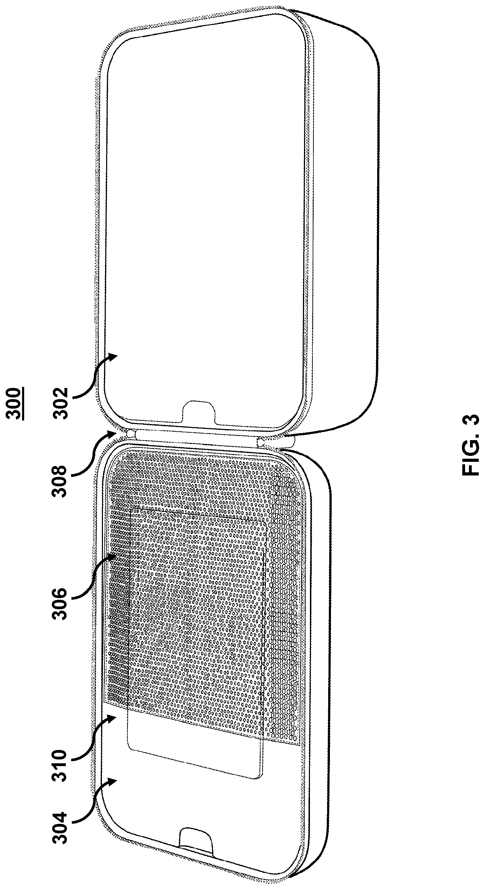

FIG. 3 shows an accessory for a virtual reality or augmented reality headset currently in a partially open state, in accordance with one or more embodiments. For example, accessory 300 may contain a virtual reality or augmented reality headset (e.g., as discussed below in FIG. 5). Accessory 300 may correspond to accessory 400 (FIG. 4) when accessory 400 (FIG. 4) is in a partially open state.

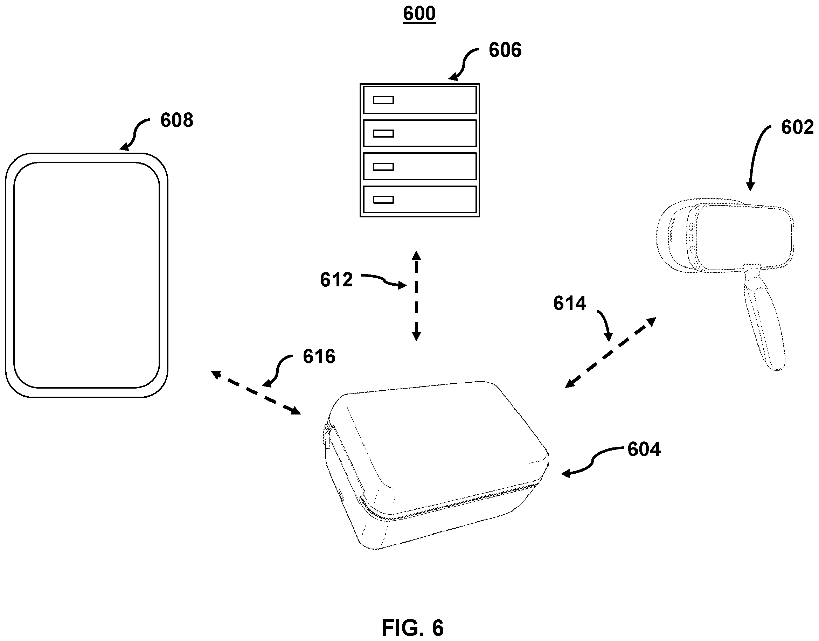

For example, in FIG. 3, a top portion and a bottom portion of accessory 300 have been separated by rotating the top portion around an axis of hinge 308. Accordingly, a portion of the interior of accessory 300 is exposed. For example, accessory 300 includes a top portion and a bottom portion connected by a hinge 308, and accessory 300 has been changed from a closed state to a partially open state by rotating the top portion using the first hinge. In the partially open state, the top portion and bottom portion are separated, but a virtual reality or augmented reality headset (e.g., headset 602 (FIG. 6)) is not exposed. For example, separator 302, which is located between the top portion and the bottom portion prevents the virtual reality or augmented reality headset (e.g., headset 602 (FIG. 6)) from falling out of the accessory when in this partially open state.

In the partially open state, separator 304 is also visible. Separator 304 is also located between the top portion and the bottom portion of accessory 300 and is rotatable along the hinge 308. Separator 304 also includes binding 306 for storing ancillary device 310. For example, ancillary device 310 may comprise a tablet computer and binding 306 may hold ancillary device 310 in place. For example, binding 306 may comprise a mesh holder compartment to hold ancillary devices such as a tablet computer, headphones, power cord, and/or a handheld controller in place. In some embodiments, binding 306 may comprise securing straps (e.g., as shown in FIG. 4 holding headphones as well as USB-C power adaptor and cables in place).

FIG. 4 shows an accessory for a virtual reality or augmented reality headset currently in a partially open state, in accordance with one or more embodiments. For example, accessory 400 may contain a virtual reality or augmented reality headset (e.g., as discussed below in FIG. 5). Accessory 400 may correspond to accessory 100 (FIG. 1) when accessory 100 (FIG. 1) is in a closed state. Accessory 400 may range in size and weight. The arrangement of the items within accessory 100 allows for numerous system components to be easily transported. For example, accessory 100 may include a VR headset (with head straps and with cold-shoe for connecting to a removable handle), a handheld headset controller, a tablet/wireless touchscreen, a lithium power bank or battery pack, a computational board with Wi-Fi, LTE and USB-C communication capabilities, a face plate accessory, additional accessories such as wearable devices, headphones, cleaning swabs/spray, a power adapter, and a female connector with a power-point mounted on side of accessory 400.

In an open state, a virtual reality or augmented reality headset (e.g., headset 408) is exposed. For example, separator 404 (which may correspond to separator 302 (FIG. 3)) is pulled up to reveal interior surface 424. Interior surface 424 may include any suitable material that may provide protection to components stored within accessory 400 such as headset 408 and a communication component, power source, or power management component, which are located between interior surface 424 and exterior housing 422. Interior surface 424 may include one or more concave or convex elements in order to securely hold system components in accessory 400. The concave or convex elements may additionally be form fitted to hold a particular system component. For example, as shown in FIG. 4, concave element 418 is form fitted to hold headset 408. Likewise, concave element 410 for holding a removable handle (e.g., handle 506 (FIG. 5)).

Headset 408 may include an induction charge receiver and/or receive power through an installed wireless induction coil and/or the wireless induction charging power bank. In some embodiments, headset 408 may instead rely on an internal power source (e.g., battery or power bank) to supply power through a circuit board to headset 408 via a cable connected to headset 408. In some embodiments, headset 408 may include a cold-shoe that allows a handle to be attached (e.g., as shown in FIG. 5), which allows headset 408 to be used without head straps.

The interior surfaces of accessory 400 may also feature other binding mechanisms (e.g., binding 306 (FIG. 3)) or straps, buttons, latches, and/or magnetic or electronic means of securing system components in accessory 400. Furthermore, it should be noted that both the top portion and bottom portion of accessory 400 may include interior surfaces and that each interior surface may include binding mechanisms and/or house different system components. For example, ancillary device 412 (e.g., a pair of headphones) and ancillary device 414 (e.g., a power cord) are shown as housed in the top portion of accessory 400.

Accessory 400 may also include one or more separators. For example, as shown, separator 402 is partially rotated about hinge 416 to reveal ancillary device 412 and ancillary device 414. Separator 402 is shown with a binding (e.g., corresponding to binding 306 (FIG. 3)) for storing an ancillary device. Accessory 400 also includes separator 404, which is rotated about hinge 420. As shown in FIG. 4, separators (e.g., separator 404) may include surface features that act to bind and/or work in concert with concave elements on interior surface 424. For example, separator 404 includes protrusion 406 (e.g., a foam extrusion), which acts to secure headset 408 when accessory 400 is in a closed state. Separator 404 also ensures that headset 408 is held securely in place (e.g., on top of wireless induction charging power bank to make sure charging takes place). In some embodiments, separators (e.g., separator 404 and 402) may create a "false-floor" shaped to house a headset 408 and a removable handle in place during transit. In some embodiments, interior surface 424 may also comprise a "false-floor" and house the circuit board with the communication component, power source, and power management component beneath interior surface 424. Ease of use in accessing these components through the use of the "false-floor" may help with removing these components for shipping or replacing components, but also ensure that these components are protected even when accessory 400 is in an open state.

Although not shown in FIG. 4, accessory 400 may include a circuit board or other control or processing circuitry. The circuit board may include a communication component and/or a power management component. The communication component may act as a Wi-Fi router, creating a local wireless network connection between the virtual reality or augmented reality headset (e.g., headset 602 (FIG. 6)) and a circuit board/communication component (e.g., contained within accessory 400) as well as between an ancillary device (e.g., ancillary device 608 (FIG. 6)) and the circuit board/communication component. In addition, the communication component may act as a modem, connecting both the virtual reality or augmented reality headset (e.g., headset 602 (FIG. 6)) and ancillary device (e.g., ancillary device 608 (FIG. 6)) to a remote server (e.g., remote server 606 (FIG. 6)) either via an ethernet, Wi-Fi or LTE connection.

In some embodiments, the LTE connection may be based on 3G, 4G or 5G and/or any future LTE standard to allow faster network connection speeds and to allow streaming of content directly from a remote source (e.g., remote server 606 (FIG. 6)). The communication component is configured to assist remote content management (distribution), remote device management and remote analytics and reporting. Furthermore, the communication components use of a 4G/5G and/or any future LTE cellular connection means that the communication component does not have to connect to a local network through Wi-Fi or Ethernet network (e.g., at a user's location or other) to download any updates or transmit usage statistics, which facilitates mobile usage. The communication component also enables connectivity via Bluetooth, Wi-Fi and or any other future network connectivity to first/second/third-party devices such as smart watches, heart rate monitors, EEG and ECG monitors, motion range detectors, and other wearable electronic devices.

The circuit board may also include a power management component, which both distributes power to and/or provides power management to one or more of the system components. The power management component may receive power from an external power source via an I/O port (e.g., I/O port 202 (FIG. 2)) on the exterior of accessory 400. The power management component may distribute power to and provide power management of all hardware (while connected to the external power source), and simultaneously provide power to an internal power source (e.g., a battery such as Lithium power bank or power pack in order to charge the internal power source while connected to the external power source). When disconnected from the external power source, the internal power source may then provide power to the circuit board and/or communication component to power the circuit board, power management component, and/or communication component, wireless induction coil/s installed in a concave element (e.g., concave element 418) to charge a headset 408 through wireless induction charging, and/or to power or charge an ancillary device via cabling (e.g., ancillary device 608 (FIG. 6)). The internal power source may provide power to all hardware while accessory 400 is on-the-move (e.g., not plugged into an external power source).

In some embodiments, the internal power source may comprise a wireless induction power bank. In this embodiment, the circuit board, via the external power source, provides power to the wireless induction power bank, which in turn provides a charging connection to headset 408 (wireless or cabled), the circuit board, and/or an ancillary device (e.g., ancillary device 608 (FIG. 6)). In some embodiments, the power bank does not contain an internal induction charging coil and a wireless induction coil is installed in accessory 400, which is powered by and managed by the power management component. Notably, the power bank may be removable to facilitate transport. The power bank may provide power to all hardware while accessory 400 is on-the-move (e.g., not plugged into an external power source). In some embodiments, one or more of headset 408, the circuit board, and/or an ancillary device (e.g., ancillary device 608 (FIG. 6)) may additionally or alternatively be charged by other means.

FIG. 5 shows a hand-held VR headset which may be stored in the accessory, in accordance with one or more embodiments. For example, in FIG. 5, face plate 502 is currently engaged with virtual reality or augmented reality headset 520. Headset 520 is shown as a head mounted display device. It should be noted that in some embodiments, headset 520 may comprise a tablet computer, mobile phone, wearable electronic device (e.g., a watch, glasses, etc.), and/or other device through which a user may experience virtual reality and/or augmented reality.

As described herein, face plate 502 may engage with headset 520 through a variety of means. In some embodiments, face plate 502 may have a snap-fit connection with headset 520. The snap-fit connection may include annular, cantilever, u-shaped, bayonet-finger, and/or torsional snap-fit connections. For example, in an annular snap-fit, face plate 502 may experience a hoop-strain as its circumference is expanded as it is pushed onto headset 520. In another example, in a cantilever snap-fit, one or more protrusions of face plate 502 (e.g., located on flange 504) may hook into one or more recesses of headset 520. In another example, in a torsion snap-fit, one or more protrusions of face plate 502 (e.g.., located on flange 504) are deflected away from a recess of headset 520. Upon releasing face plate 502 such that the one or more protrusions are no longer deflected away, headset 520 is held in place. It should be further noted that the snap-fit connections discussed above may be temporary or permanent. For example, the connections form between face plate 502 and headset 520 may require elastic or plastic deformations to connect or to be released.

The connections described above may involve one or more protrusions on face plate 502. These protrusions may be located on flange 504. Furthermore, the protrusions may interact with one or more recesses (e.g., recess 508) on headset 520. It should be noted that in some embodiments, face plate 502 may use natural recess or texture changes to connect with headset 520. For example, while in some embodiments, headset 520 may have been configured with recesses for receiving protrusions, in other embodiments, protrusions from face plate 502 may enter recess created for other functions. For example, as shown in FIG. 5, in some embodiments, recess 508 may represent a recess in headset 520 that may be used to string a head strap, a battery pack, a surface feature, and/or other design element on headset 520.

It should be noted that in some embodiments one or more of the elements discussed above may experience one or more of the connections discussed above on a portion or in a specific area of face plate 502. For example, headset 520 may have a proximal end through which a user views content during use. Headset 520 may also have a plurality of sides extending, in a first direction, from the proximal end to a distal end. In some embodiments, the headset may have, e.g., four sides (e.g., side 512), face plate 502 may connect (using a connection discussed above) to one or more sides. In some embodiments, face plate 502 may connect to headset 520 on all sides. In some embodiments, as shown in FIG. 5, face plate 502 may connect to headset 520 about the entire circumference of headset 520 (e.g., the circumference of headset about an axis along the first direction). In some embodiments, the connections between face plate 502 and headset 520 may be continuous (e.g., in an embodiment in which face plate 502 connects about the circumference of headset 520) or may be noncontinuous (e.g., in embodiments of face plate 502 when face plate 502 includes one or more cut-out portions).

In some embodiments, face plate 502 may include one or more apertures in face plate 502 or flange 504. For example, as shown in FIG. 1, flange 504 includes aperture 510. In some embodiments, apertures in face plate 502 or flange 504 (e.g., aperture 510) may allow access to one or more surface features. As described herein, surface features may include any feature on the surface of headset 520. For example, a surface feature may include a button or other input mechanism and/or an I/O path (e.g., an HDMI, USB, etc. input). Additionally or alternatively, a surface feature may include a power supply (e.g., a port for inserting a power cable, connecting a battery, a copper pin connection) or an area used to connect to and/or facilitate a connection with an induction coil. Surface features may also include display areas (e.g., screens, digital displays, etc.) on the headset, speaker and/or audio ports, and/or camera lens or other sensors or content capture components. Surface features may also include design elements of headset 520 such as ridges, graphics, etc.

In some embodiments, one or more components of face plate 502, or the materials of those components, may be transparent or semi-transparent. In some embodiments, the use of transparent or semi-transparent materials may provide the same functionality of one or more apertures described herein. In some embodiments, apertures may include alternative materials than those used for non-apertures of face plate 502 (e.g., materials that allow surface features to be accessed). For example, through the use of transparent or semi-transparent materials and/or apertures, face plate 502 may prevent an obstruction of one or more cameras on headset 520.

Face plate 502 includes face plate 502. Face plate 502 is located at the distal end of headset 520. Face plate 502 is shown in FIG. 5 as comprising transparent or semi-transparent material. It should be noted that in some embodiments, face plate 502 may include one or more apertures to allow access to one or more surface features (e.g., a camera lens). Face plate 502 extends in a plane parallel to the distal end of headset 520. In some embodiments, face plate 502 may extend to the edges of the distal end of headset 520 in all directions. In some embodiments, face plate 502 may extend to only some of the edges of the distal end of headset 520. It should also be noted that in some embodiments, face plate 502 may only extend to some of the side (e.g., side 512) of headset 520. Furthermore, face plate 502 may extend in a non-uniform manner to one or more of the edges and/or one or more of the sides of headset 520.

In some embodiments, face plate 502 may comprise materials selected for a specific purpose. For example, in some embodiments, face plate 502 may comprise a metallic substance, an embedded metal substance, and/or other heat dissipating substance in order to dissipate heat from the distal end of headset 520. For example, a battery and/or main processor may be located at the distal end of headset 520. Accordingly, face plate 502 may comprise a material that is effective in dissipating this heat. In some embodiments, face plate 502 may include a material that allows graphics, branding, or other markings to be displayed.

Adjacent to face plate 502 is flange 504. Flange 504 may comprise a single flange that encircles the circumference of headset 520 or may include multiple flanges. For example, face plate 502 may include a separate flange for each side (e.g., side 512) of headset 520. It should be noted that in some embodiments, flange 504 (and/or face plate 502) may include one or more aperture and/or cut-out portions. It should be noted that a single flange with cut-out portions may be functionally equivalent to multiple flanges. It should therefore be noted that embodiments discussed herein with one flange (or a flange with a cut-out portion) also apply to embodiments with multiple flanges and vice versa.

Flange 504 may extend away from the plane of face plate 502 in a second direction that is opposite to the first direction. For example, flange 504 may extend over or on more of the sides (e.g., side 512) of headset 520. The extent to which flange 504 extends in the second direction may vary. For example, in some embodiments, flange 504 may extend in a second direction to a particular recess (e.g., recess 508). In some embodiments, flange 504 may extend in the second direction to a point in which a sufficient hoop-strain is exerted on flange 504 to hold face plate 502 to headset 520.

Flange 504 may include one or more protrusions. These protrusions may extend in towards headset 520. For example, the protrusions may be received by recesses (e.g., recess 508) in headset 520 in order to hold face plate 502 to headset 520. It should also be noted that in some embodiments, headset 520 may include protrusions that are received by recesses (or apertures) in face plate 502. For example, in some embodiments, headset 520 may include one or more protrusions, including a protrusion about the circumference of headset 520 that causes face plate 502 to be fitted to headset 520. For example, during connection flange 504 may be pushed over a protrusion on headset 520 to form a fitted connection.

FIG. 5 also includes handle 506. Handle 506 may correspond to concave element 410 (FIG. 4). Handle 506 is currently attached to face plate 502. As shown in FIG. 5, handle 506 connects to face plate 502. In some embodiments, handle 506 may connect to flange 504. In FIG. 1, handle 506 extends at a downward angle from face plate 502. The degree of the downward angle may vary (as described in relation to FIG. 4). In some embodiments, handle 506 may be removable. For example, handle 506 may connect to face plate 502 or flange 504 via one or more of the snap-fit connections discussed above. Additionally or alternatively, handle 506 may connect through other permanent or non-permanent mechanical fasteners. For example, handle 506 may connect via a thread fastener, clamp, buckle, or bolt. Furthermore, handle 506 may connect to face plate 502 through one or more joints to allow for a freedom of movement for surface feature 106. In some embodiments, handle 506 may also connect via a magnet system. For example, neodymium magnets may be placed at the base of handle 506 and/or the contact point on face plate 502 or flange 504.

Handle 506 is located near the bottom edge of face plate 502 and is located substantially in the horizontal center of the distal end of headset 520. For example, by placing handle 506 in this location, handle 506 as well the hand of a user holding headset 520 will not obstruct one or more cameras on headset 520. Furthermore, by placing handle 506 in this location, a lefthanded user or right-handed user may grip handle 506 with his or her preferred hand. Moreover, as handle 506 extends in a downward angle in the first direction, handle 506 provides an ergonomic benefit, which may assist a user in holding headset 520 for the duration of his or her use.

As shown in FIG. 5, face plate 502 may be for a virtual reality or augmented reality headset (e.g., headset 520) having a proximal end through which a user views content while the headset is in use and a plurality of sides (e.g., side 512) extending from the proximal end to a distal end. Face plate 502 may include face plate 502, which is removably attached to headset 520 at the distal end of headset 520. Face plate 502 may also include flange 504 extending from face plate 502. Face plate 502 may be configured to contact one or more of the plurality of sides (e.g., side 512) of headset 520 to secure face plate 502 to headset 520. Face plate 502 may also include handle 506 extending at a downward angle in the first direction, from a point substantially in line with a horizontal center point of the distal end of the headset 520. For example, by extending from a point in line with a horizontal center of the distal end of the headset, overall balance of the face plate 502 and headset 520 is improved.

For example, handle 506 may extend from a center point of face plate 502. This center point may be a center point in the vertical and/or horizontal direction. In some embodiments, handle 506 may extend from a point on face plate 502 that is centrally located in the horizontal direction, but substantially near the bottom edge of face plate 502 in order to ensure that handle 506 and/or a hand of a user does not obstruct a forward facing camera of headset 520. Furthermore, in some embodiments, handle 506 may extend from a flange 504, which extends along a bottom side of headset 520. Extending handle 506 from flange 504 (on the bottom side) further ensures that handle 506 and/or a hand of a user does not obstruct a forward-facing camera of headset 520. Furthermore, in some embodiments, extending handle 506 from a point away from the distal end, in a second direction which is opposite of the first direction, may increase overall balance. For example, by moving the point at which handle 506 extends from face plate 502 closer to the proximal end also increases overall balance. Additionally, or alternatively, handle 506 may extend towards a user. For example, handle 506 may extend in a downward angle in the second direction. In some embodiments, the direction of handle 506 may be based on the type of device of headset (e.g., head mounted display, tablet computer, etc.).

FIG. 6 shows a diagram featuring the various system components, in accordance with one or more embodiments. As shown in FIG. 6, system 600 includes accessory 604, headset 602, ancillary device 608, and remote server 606. Each of these devices may receive content and data via input/output (hereinafter "I/O") paths and may also include processors and/or control circuitry to send and receive commands, requests, and other suitable data using the I/O paths. The control circuitry may be comprised of any suitable processing circuitry. Each of these devices may also include a user input interface and/or display for use in receiving and displaying data. By way of example, accessory 604 may comprise a carrying case that functions as a local thick client that supports headset 602 (which may be a virtual reality or augmented reality headset). Ancillary device 608 may comprise a mobile device such as a tablet computer, laptop computer, or smartphone. It should be noted that in some embodiments, ancillary device 608 may comprise a stationary device such as an out-of-home display, user terminal, electronic billboard, electronic kiosk, desktop computer, or other electronic device. Remote server 606 may comprise one or more computing devices, some of which may be cloud-based. Users may, for instance, utilize one or more of the user devices to interact with one another, one or more servers, or other components of system 600. It should be noted that, while one or more operations are described herein as being performed by particular components of system 600, those operations may, in some embodiments, be performed by other components of system 600. As an example, while one or more operations are described herein as being performed by components of ancillary device 608, those operations may, in some embodiments, be performed by components of remote server 606.

Each of these devices may also include memory in the form of electronic storage. The electronic storage may include non-transitory storage media that electronically stores information. The electronic storage of media may include (i) system storage that is provided integrally (e.g., substantially non-removable) with servers or client devices and/or (ii) removable storage that is removably connectable to the servers or client devices via, for example, a port (e.g., a USB port, a firewire port, etc.) or a drive (e.g., a disk drive, etc.). The electronic storages may include optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. The electronic storages may include virtual storage resources (e.g., cloud storage, a virtual private network, and/or other virtual storage resources). The electronic storage may store software algorithms, information determined by the processors, information obtained from servers, information obtained from client devices, or other information that enables the functionality as described herein.

FIG. 6 also includes communication paths 612, 614, and 616. Communication paths 612, 614, and 616 may include the Internet, a mobile phone network, a mobile voice or data network (e.g., a 4G or LTE network), a digital cellular network, a cable network, a public switched telephone network, or other types of communications network or combinations of communications networks. Communication paths 612, 614, and 616 may include one or more communications paths, such as a satellite path, a fiber-optic path, a cable path, a path that supports Internet communications (e.g., IPTV), free-space connections (e.g., for broadcast or other wireless signals), or any other suitable wired or wireless communications path or combination of such paths. The computing devices may include additional communication paths linking a plurality of hardware, software, and/or firmware components operating together. For example, the computing devices may be implemented by a cloud of computing platforms operating together as the computing devices. It should be noted that while only communication path 612 is shown linking remote server 606 and accessory 604, in some embodiments, other communication paths may exist connecting the different components of the system (e.g., connecting headset 602 directly to ancillary device 608, connecting headset 602 directly to remote server 606, etc.). For example, although communications paths are not drawn between these components, these components may, in some embodiments, communicate directly with each other via communication paths, such as those described above in connection with paths 612, 614, and 616, as well as other short-range point-to-point communication paths, such as USB cables, IEEE 1394 cables, wireless paths (e.g., Bluetooth, infrared, IEEE 802-1 1x, etc.), or other short-range communication via wired or wireless paths. BLUETOOTH is a certification mark owned by Bluetooth SIG, INC.

The system may use one or more hardware or software-based techniques for identifying the devices within system 600. For example, the system (or one or more of the individual devices within system 600) may be associated with a device ID, serial number, and/or any other identifier that distinguishes one or more devices in system 600 or system 600 from other systems. According to the invention, accessory 604 is associated with a unique address. For example, the address may be an IP address, which may be a 32-bit address often written in 4 groups of 3 decimals and may be associated with a router (e.g., located in accessory 604). Alternatively, or additionally, each device in system 600 may have a Mac address for identifying hardware within the system and/or a gateway address for sending data out of system 600. In some embodiments, system 600 (or one or more of the individual devices within system 600) may be associated with a device account or user profile. For example, in response to a user (or operator) logging into a device account or user profile on accessory 604 and/or ancillary device 608, remote server 606 may identify shared content for transmitting to accessory 604 and/or ancillary device 608.

Remote server 606 may include one or more devices and act as a content source for shared content. For example, remote server 606 may include one or more types of content distribution equipment including a television distribution facility, cable system headend, satellite distribution facility, programming sources, or intermediate distribution. Remote server 606 may include cable sources, satellite providers, on-demand providers, Internet providers, over-the-top content providers, or other providers of content. Remote server 606 may also include a remote media server used to store different types of content (including VR content applications and video content selected by a user), in a location remote from any of the components of system 600. Remote server 606 may also include information about a user and/or purpose of use of the system components. This information may be used to select shared content and/or targeting users of system 600. It should also be noted that in some embodiments, the system components may operate in a cloud computing environment to access cloud services. In a cloud computing environment, various types of computing services for content sharing, storage or distribution (e.g., video sharing sites or social networking sites) are provided by a collection of network-accessible computing and storage resources, referred to as "the cloud." For example, the cloud can include a collection of server computing devices (e.g., remote server 606), which may be located centrally or at distributed locations, that provide cloud-based services to various types of users and devices connected via a network such as the Internet.

Each component of system 600 may include software applications. These applications may be, for example, stand-alone applications implemented on a respective device. For example, the application may be implemented as software or a set of executable instructions which may be stored in memory on a device (e.g., accessory 604), and executed by control circuitry on that device. In some embodiments, the applications may be client-server applications where only a client application resides on the device (e.g., headset 602), and server application resides, or partially resides, on a remote server (e.g., remote server 606).

System 600 may use one or more applications to generate shared content on system components. For example, system 600, or one or more of the individual components of system 600, may generate for display a user input interface. For example, a first user input interface may be implemented on a virtual reality or augmented reality headset (e.g., headset 602). The user input interface may allow a user to view and/or interact with the shared content on a system component. The user input interface may use one or more types of interaction. Types of interactions may include touch-screen controls, keyboard entries, voice controls, motioncontrols, and/or inputs from various input devices such as a remote control, mouse, trackball, keypad, keyboard, touch screen, touchpad, stylus input, joystick, voice recognition interface, or other user input interface. System 600 or components of system 600 may distinguish between the types and some types may only be compatible with particular components of system 600.

The user input interface may also include a custom menu interface that is selected by system 600 based on the system component on which the shared content is being accessed. For example, conventional menu screens, drop-down displays, search bars, and other conventional data organizational structures and navigation techniques that rely on additional screen real estate to indicate how data relates to other data may be difficult to present or difficult for a user to select in a virtual or augmented reality environment; therefore, the system may select a menu that is compatible with the system component on which the shared content is being accessed.

For example, system 600 may generate for display a first user input interface implemented on the virtual reality or augmented reality headset (e.g., headset 602), wherein the first user input interface uses a first type of interaction (e.g., voice commands) and features a first menu interface (e.g., that uses on-screen icons) for accessing the shared content, and wherein the virtual reality or augmented reality headset uses a first operating system (e.g., that is determined by system 600 to be compatible with headset 602). System 600 may also generate for display a second user input interface implemented on the ancillary device (e.g., ancillary device 608), wherein the second user input interface uses a second type of interaction (e.g., touch-screen controls) and features a second menu interface (e.g., featuring drop-down menus and search bars) for accessing the shared content, and wherein the ancillary device uses a second operating system (e.g., that is determined by system 600 to be compatible with ancillary device 608).

In some embodiments, ancillary device 608 may implement an application that includes pre-defined content sets to be selected, played and organized (playlisted) according to a user's needs. The application may provide usage, content and device data communication to a remote server (e.g., remote server 606) as well as access to storage, distribution and back-up of content, diagnostics, and/or user data. The application may provide any updates, changes and adaptations to the playlist and may automatically push those to headset 602 thereby synchronizing ancillary device 608 and/or accessory 604 (e.g., via a communication component within accessory 604).

For example, in some embodiments, headset 602 may wait to receive instructions from the ancillary device 608 to play synchronized shared content or stream shared content from accessory 604 (e.g., via a communication component within accessory 604) or remote server 606. In response to receiving a request to play the shared content (e.g., via a user input on ancillary device 608), headset 602 may begin playback. Headset 602 may receive a signal indicating that the shared content is ready to be streamed from accessory 604 or remote server 606 and/or internal storage of headset 602. In some embodiments, headset 602 may determine when it is placed on a viewer's face (e.g., based on the in-headset sensor technology) and play/stream the selected shared content. When the shared content plays on headset 602, it also plays on the ancillary device 608. From ancillary device 608, the shared content being played on the headset 602 can be controlled (e.g., the shared content can be paused, resumed and stopped). The system may then determine when the user removes headset 602 and/or the shared content has ended. If a playlist has been created, more shared content will begin playing until the ancillary device 608 ends the playback or headset 602 is removed. The system components then enter an idle state.

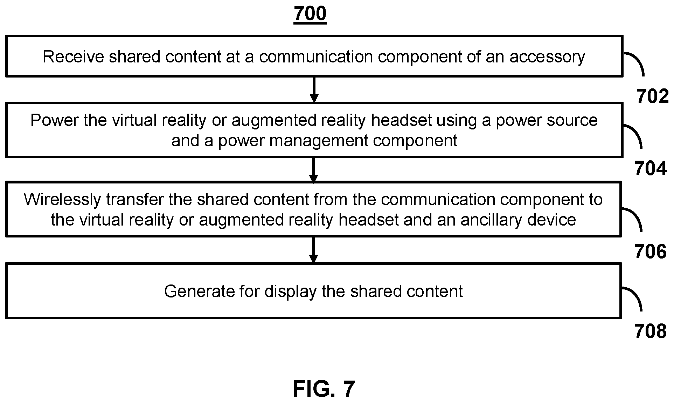

FIG. 7 shows a flow chart of steps in an illustrative method of sharing content between devices, in accordance with one or more embodiments. For example, process 700 may represent the steps taken by one or more devices as shown in FIGS. 1-6 or 9-10 when generating display content shared on a virtual reality or augmented reality headset and an ancillary device.

At step 702, process 700 receives, from a remote server (e.g., remote server 606 (FIG. 6)) over a wireless Internet communication (e.g., via communication path 612 (FIG. 6)), shared content at a communication component of an accessory (e.g., accessory 604 (FIG. 6)). The accessory is configured to change from an open state (e.g., as shown in FIG. 4) to a closed state (e.g., as shown in FIG. 1). The communication component indicates an address associated with a virtual reality or augmented reality headset. For example, while the communication component indicates an address associated with an accessory (e.g., accessory 604 (FIG. 6)), the system may also rely on that address to transmit content to other system components (e.g., headset 602 (FIG. 6) or ancillary device 608 (FIG. 6)).

At step 704, process 700 may power and/or 'wake up' the virtual reality or augmented reality headset using a power source and a power management component. For example, the system may use a power source and power management component located in the accessory (e.g., accessory 604 (FIG. 6)) to enable communication that requires more processing power, specialized components, and more power consumption. It should be noted that in some embodiments, process 700 receives power prior to, during, and/or after receiving the shared content. For example, in some embodiments, an accessory (e.g., accessory 604 (FIG. 6)) may act as an Internet of Things ("IoT") device. For example, the Internet connectivity of accessory 604 allows a return path of usage and/or diagnostic data to be sent to remote server 606. The system may connect to remote server 606 via the Internet without user intervention as long as an accessory (e.g., accessory 604 (FIG. 6) or the communication component) is receiving power from a power source (e.g., an internal battery, power bank, and/or directly external power source).

The communication component, power source, and power management component are positioned (e.g., on a single circuit board) between an exterior housing of the accessory and an interior surface of the accessory while the accessory is in both the open state and the closed state. For example, by enclosing (either fully or partially) the communication component, power source, and power management component, they are protected from both external forces (e.g., the accessory being dropped) and internal forces (e.g., the movement of stored system components during transit). The interior surface (e.g., interior surface 424 (FIG. 4)) is located within the exterior housing (e.g., exterior housing 422 (FIG. 4)) and includes a first concave opening (e.g., concave element 418 (FIG. 4)) for receiving the virtual reality or augmented reality headset (e.g., headset 602 (FIG. 6)) while the accessory (e.g., accessory 604 (FIG. 6)) is in the closed state (e.g., as shown in FIG. 1) and from which the virtual reality or augmented reality headset is accessible while the accessory is in the open state (e.g., as shown in FIG. 4).

In some embodiments, the interior surface may include a second concave opening for receiving a handle attachment (e.g., a handle shown in concave element 410 (FIG. 4)) for the virtual reality or augmented reality headset while the accessory is in the closed state and from which the handle attachment is accessible while the accessory is in the open state. For example, the accessory (e.g., accessory 604 (FIG. 6)) may transport multiple system components in a protected and space efficient arrangement. Furthermore, in some embodiments, powering the virtual reality or augmented reality headset using the power source and the power management component may comprise inductive charging. Accordingly, the system components requiring charging (e.g., headset 602 (FIG. 6) and ancillary device 608 (FIG. 6)) may be arranged such that a charging pad is positioned at or near the system component while the system component is stored in the accessory (e.g., accessory 604 (FIG. 4)). In some embodiments, the charging pad may be positioned between the interior surface (e.g., interior surface 424 (FIG. 4)) and exterior housing (e.g., exterior housing 422 (FIG. 4)). In such embodiments, the material composition of interior surface (e.g., interior surface 424 (FIG. 4)) may differ near the charging pad to enable efficient charging. Alternatively or additionally, the charging pad may be located on top of the interior surface (e.g., interior surface 424 (FIG. 4)) and connected to the power source and/or power management component via a cable through the interior surface.

At step 706, process 700 wirelessly transfers (e.g., via communication path 614 (FIG. 6) or communication path 616 (FIG. 6)) the shared content from the communication component (e.g., located in accessory 604 (FIG. 6)) to the virtual reality or augmented reality headset (e.g., headset 602 (FIG. 6)) and an ancillary device (e.g., ancillary device 608 (FIG. 6)). At step 708, process 700 generates display of the shared content. For example, the system may generate the shared content on the virtual reality or augmented reality headset (e.g., headset 602 (FIG. 6)) and the ancillary device (e.g., ancillary device 608 (FIG. 6)). For example, the system may the shared content of the different system components. Users of the respective system components may then interact with the shared content in a controlled viewing experience. For example, the system may generate for display a first user input interface implemented on the virtual reality or augmented reality headset (e.g., headset 602 (FIG. 6)), wherein the first user input interface uses a first type of interaction and features a first menu interface for accessing the shared content, and wherein the virtual reality or augmented reality headset uses a first operating system.

Alternatively, the ancillary device (e.g., ancillary device 608 (FIG. 6)) may provide the first user input interface and/or the functions of the first user input interface. Accordingly, a second user (e.g., an operator) may control the content displayed to the first user. The removal of the first user input interface may further provide the user with a more immersive experience.

For example, the first user input interface may be customized to the operating system and/or hardware or software capabilities of the virtual reality or augmented reality headset (e.g., headset 602 (FIG. 6)). The system may also generate for display a second user input interface implemented on the ancillary device, wherein the second user input interface uses a second type of interaction and features a second menu interface for accessing the shared content, and wherein the ancillary device uses a second operating system. For example, the second user input interface may be customized to the operating system and/or hardware or software capabilities of the ancillary device (e.g., ancillary device 608 (FIG. 6)).

It is contemplated that the steps or descriptions of FIG. 7 may be used with any other embodiment of this disclosure. In addition, the steps and descriptions described in relation to FIG. 7 may be done in alternative orders or in parallel to further the purposes of this disclosure. For example, each of these steps may be performed in any order or in parallel or substantially simultaneously to reduce lag or increase the speed of the system or method. Furthermore, it should be noted that any of the devices or equipment discussed in relation to FIGS. 1-6 could be used to perform one or more of the steps in FIG. 7.

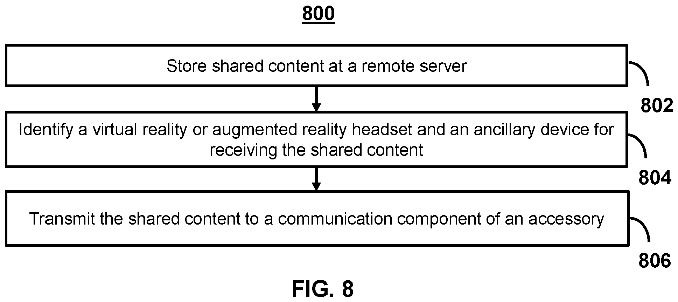

FIG. 8 shows a flow chart of steps in another illustrative method of facilitating a controlled viewing experience, in accordance with one or more embodiments. For example, process 800 may represent the steps taken by one or more devices as shown in FIGS. 1-6 or 9-10 when transmitting shared content to a virtual reality or augmented reality headset and an ancillary device.

At step 802, process 800 stores shared content at a remote server (e.g., remote server 606 (FIG. 6)). For example, the system may store shared content remotely at a server. The shared content may be accessible on-demand based on the processing power and communication methods available to accessory 604 (FIG. 6)). For example, the system may collect data from the virtual reality or augmented reality headset (e.g., headset 602 (FIG. 6)) and/or ancillary devices (e.g., ancillary device 608 (FIG. 6)) and communicate it to a remote server (e.g., remote server 606 FIG. 6)). This data may include usage data pertaining to the user's interaction with the virtual reality or augmented reality headset (e.g., headset 602 (FIG. 6)), which may include, content selected, content time watched, most popular content, content interaction, and/or content heatmaps etc. as well as diagnostics (e.g., temperature, battery level, and software version numbers, etc.). This data may then be transmitted to a remote server (e.g., remote server 606 (FIG. 6)).

At step 804, process 800 identifies (e.g., at remote server 606 (FIG. 6)), a virtual reality or augmented reality headset (e.g., headset 602 (FIG. 6)) and an ancillary device (e.g., ancillary device 608 (FIG. 6)) for receiving the shared content. For example, based on the data received from the virtual reality or augmented reality headset (e.g., headset 602 (FIG. 6)) and/or ancillary devices (e.g., ancillary device 608 (FIG. 6)), the system may deploy shared content and receive, analyze, and report the usage data and diagnostics received, as well as adjust, manipulate and/or reconfigure shared content according to data received, and/or share such data with third parties.

The system may perform the identification based on an address associated with a communication component of an accessory (e.g., accessory 604 (FIG. 6)) and/or another unique identifier. For example, the remote server (e.g., remote server 606 (FIG. 6)) may store the serial numbers of all devices/components along with the information of a client registering a device. The system may therefore manage components on an individual level and provide accurate support to the relevant devices/platforms and/or clients.

At step 806, process 800 transmits, from the remote server (e.g., remote server 606 (FIG. 6)) over a wireless Internet communication (e.g., via communication path 612 (FIG. 6)), the shared content to the communication component (e.g., a communication component in accessory 604 (FIG. 6)). The system may stream the shared content and/or download content in either a push or pull configuration when transmitting the shared content. The system may also transmit other instructions or data based on device health, data gathered on the use of content and reports derived from analytics. The system may also continue to manage the shared content that is deployed (e.g., issue updates, patches, and/or recalls) and well as manage content subscriptions or device authorization (if needed).

In some embodiments, after the system has transmitted the content to the communication component, the communication component may further distribute the shared content to the device components (e.g., headset 602 (FIG. 6) and ancillary device 608 (FIG. 6)). According to the invention, the virtual reality or augmented reality headset is powered using a power source and a power management component located in the accessory (e.g., accessory 604 (FIG. 6)). The communication component, power source, and power management component are positioned between an exterior housing of the accessory (e.g., exterior housing 422 (FIG. 4)) and the interior surface of the accessory while the accessory (e.g., interior surface 424 (FIG. 4)) is in both an open state (e.g., as shown in FIG. 4) and a closed state (e.g., as shown in FIG. 1).

For example, the system may distribute the shared content wirelessly from the communication component to the virtual reality or augmented reality headset (e.g., headset 602 (FIG. 6)) and the ancillary device (e.g., ancillary device 608 (FIG. 6)). The system may then distribute the shared content to the other devices in the system by streaming and/or downloading content in either a push or pull configuration. The system may then generate for display the shared content, at the virtual reality or augmented reality headset (e.g., headset 602 (FIG. 6)) and the ancillary device (e.g., ancillary device 608 (FIG. 6)).

In some embodiments, the system may automatically display content (e.g., based on instructions transmitted with or in conjunction with the shared content. Alternatively, or additionally, users (e.g., an operator) may manually request for the shared content to be display. In some embodiments, a user using one device (e.g., ancillary device 608 (FIG. 6)) may manually activate the shared content to be displayed on the virtual reality or augmented reality headset (e.g., headset 602 (FIG. 6)). Accordingly, a user using the ancillary device (e.g., ancillary device 608 (FIG. 6)) may control how, when, and what shared content is experienced by a user using a virtual reality or augmented reality headset (e.g., headset 602 (FIG. 6)).

In some embodiments, the system may receive a request from the communication component for the shared content. For example, a user (e.g., using ancillary device 608 (FIG. 6)) may request the transmission of specific shared content. In some embodiments, the user may be using a remote device (e.g., a device that is not part of the system). For example, a user may remotely trigger the transmission of shared content to an accessory (e.g., accessory 604 (FIG. 6)) and/or to a group of accessories. In some embodiments, the system may target transmissions of shared content or particular shared content to a given accessory based on a user profile associated with a user, information about the location of the accessory, and/or based on the current purpose of the use of the accessory.

Alternatively or additionally, the system may transmit shared content automatically upon one or more system components being powered-on, entering a charging mode, one or more system components being connected to the Internet, according to a predetermined schedule, and/or upon the availability of new shared content.

In some embodiments, the system may transmit the shared content in multiple formats. For example, the system may transmit shared content in a first format for use with the virtual reality or augmented reality headset, wherein the virtual reality or augmented reality headset uses a first user input interface, and wherein the virtual reality or augmented reality headset uses a first operating system. The system may also transmit the shared content in a second format for use with the ancillary device, wherein the ancillary device uses a second user input interface, and wherein the ancillary device uses a second operating system. The system may further select the formats of shared content based on characteristics of system components. For example, the system (e.g., as described n FIG. 6 above) may determine that the format and/or formats of the shared content is compatible with one or more of the system components (e.g., ancillary device 608 (FIG. 6) or headset 602 (FIG. 6)).

It is contemplated that the steps or descriptions of FIG. 8 may be used with any other embodiment of this disclosure. In addition, the steps and descriptions described in relation to FIG. 8 may be done in alternative orders or in parallel to further the purposes of this disclosure. For example, each of these steps may be performed in any order or in parallel or substantially simultaneously to reduce lag or increase the speed of the system or method. Furthermore, it should be noted that any of the devices or equipment discussed in relation to FIGS. 1-6 could be used to perform one or more of the steps in FIG. 8.

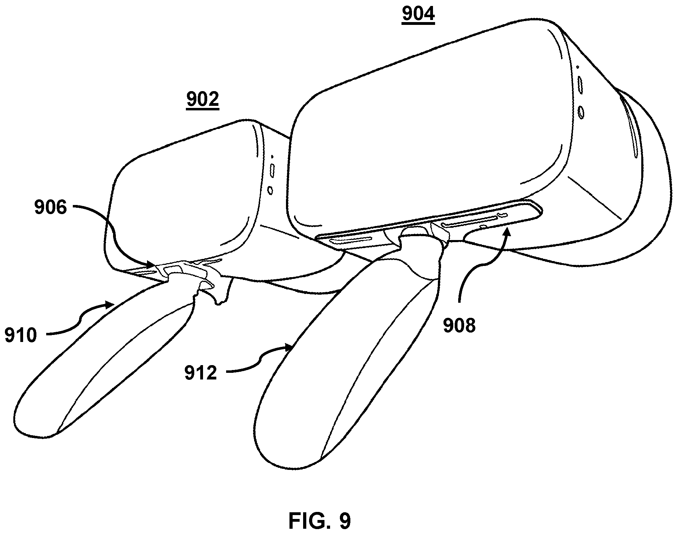

FIG. 9 shows another hand-held VR headset which may be stored in the accessory, in accordance with one or more embodiments. It should be noted that the embodiment of FIG. 9 may be used with any other embodiment described herein (e.g., embodiments described in FIGS. 1-8 and 10). In particular, FIG. 9 shows headset 902 and headset 904, each with a different cold-shoe attachment (e.g., attachment 906 and attachment 908, respectively). Attachment 906 is a cold-shoe attachment for receiving handle 910, which may have been stored in concave element 410 (FIG. 4). Attachment 908 is a cold-shoe attachment for receiving handle 912, which may have been stored in concave element 410 (FIG. 4). It should be noted that while FIG. 9 shows both headset 902 and headset 904, each headset may function individually and/or as part of a different system (e.g., system 600 (FIG. 6)). Additionally, or alternatively, headset 902 and headset 904 may function as a pair of units in a single system (e.g., in system 600 (FIG. 6)).

As shown in FIG. 9, headset 902 or headset 904 may be for a virtual reality or augmented reality headset (e.g., headset 408 (FIG. 4)) having a proximal end through which a user views content while the headset is in use and a plurality of sides extending from the proximal end to a distal end. Handle 910 and/or handle 912 extend at a downward angle in a first direction, from a point substantially in line with a horizontal center point of the distal end of headset 902 and headset 904, respectively.

For example, handle 910 may extend from a center point of headset 902. This center point may be a center point in the vertical and/or horizontal direction. In some embodiments, handle 910 may extend from a point on headset 902 that is centrally located in the horizontal direction, but substantially near the bottom edge of headset 902 in order to ensure that handle 910 and/or a hand of a user does not obstruct a forward facing camera of headset 902. Furthermore, in some embodiments, handle 910 may extend from a cold-shoe attachment (e.g., attachment 906), which extends along a bottom side of headset 902. Extending handle 910 from attachment 906 (on the bottom side) further ensures that handle 910 and/or a hand of a user does not obstruct a forward-facing camera of headset 902. Furthermore, in some embodiments, extending handle 910 from a point away from the distal end, in a second direction which is opposite of the first direction, may increase overall balance. For example, by moving the point at which handle 910 extends from headset 902 closer to the proximal end also increases overall balance. Additionally, or alternatively, handle 910 may extend towards a user. For example, handle 910 may extend in a downward angle in the second direction. In some embodiments, the direction of handle 910 may be based on the type of headset.

Attachment 906 and attachment 908 show alternative designs for cold-shoe attachments. Attachment 906 has a smaller surface area for binding to headset 902, while attachment 908 has a larger surface area. It should be noted that the size and shape of a cold-shoe attachment (e.g., attachment 906 and attachment 908) may vary. In some embodiments, the size and shape of the cold-shoe attachment may be selected based on the means by which the cold-shoe attachment is connected to a headset.

A cold-shoe attachment may be permanently, semi-permanently, or temporarily attached to a headset. In some embodiments, the cold-shoe attachment may be connected to a headset after the headset has been removed from an accessory (e.g., accessory 604 (FIG. 6)). In some embodiments, an accessory (e.g., accessory 604 (FIG. 6)) may be configured to hold a headset that is attached to a cold-shoe attachment. For example, a concave element (e.g., concave element 418 (FIG. 4)) of an interior surface (e.g., interior surface 424 (FIG. 4)) of an accessory (e.g., accessory 400 (FIG. 4)) may be configured to receive a headset with a cold-shoe attachment. For example, a handle (e.g., handle 910) may be configured to be attached to a cold-shoe attachment after removal from an accessory, while the cold-shoe attachment remains on the headset when in the accessory.

The cold-shoe attachment may be attached to the headset using any mechanical, chemical, or electrical means. The cold-shoe attachment may be attached to the headset before or after fabrication. For example, the cold-shoe attachment may be directly molded onto the headset during fabrication of the headset, or the cold-shoe attachment may be attached to the headset after fabrication (e.g., using plastic solvent glue, over-mold, or epoxy glue). Alternatively, or additionally, the cold-shoe attachment may be attached to the headset using a snap-fit connection such as annular, cantilever, u-shaped, bayonet-finger, and/or torsional snap-fit connections. Alternatively, or additionally, the cold-shoe attachment may be attached to the headset using a screw (or other mechanical means), through electrical means (e.g., a magnetic connection), or a hook-and-loop, strap, or other type of connection.

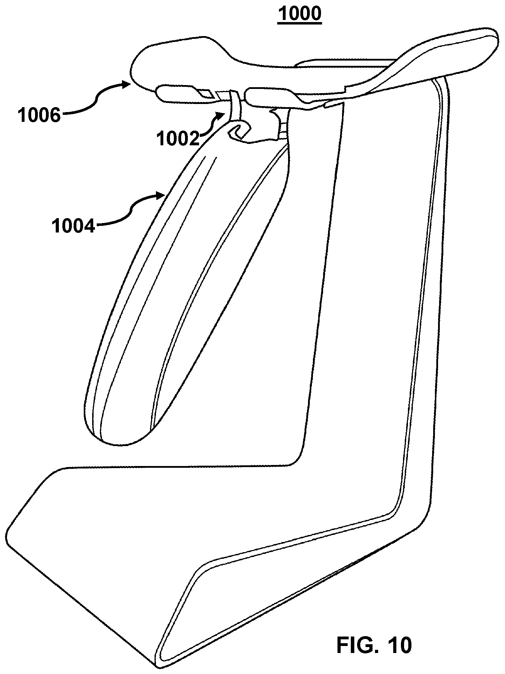

FIG. 10 shows a portable stand for holding a hand-held VR headset, in accordance with one or more embodiments. Handle 1004, which is currently connected to attachment 1006, is currently docked in stand 1000. It should be noted that in some embodiments, attachment 1006 is connected to a headset (e.g., headset 902 (FIG. 9)), but is shown unconnected in order to highlight aperture 1002.

Aperture 1002 is located between forks of stand 1000 and allows handle 1004 to pass through while a headset (not shown) is supported in stand 1000. In some embodiments, stand 1000 is configured to balance a headset at an upward angle when connected to stand 1000. In addition to providing balance, this configuration allows gravity to hold the headset in place on stand 1000. The forks of stand 1000 may additionally include ridges and/or other securing means for holding a headset in place while engaged with stand 1000. It should be noted that stand 1000 may be configured to hold a headset and attachment as shown in any of the previous figures (e.g., FIGS. 5 and 9).

The above-described embodiments of the present disclosure are presented for purposes of illustration and not of limitation, and the present disclosure is limited only by the claims which follow. Furthermore, it should be noted that the features and limitations described in any one embodiment may be applied to any other embodiment herein, and flowcharts or examples relating to one embodiment may be combined with any other embodiment in a suitable manner, done in different orders, or done in parallel. In addition, the systems and methods described herein may be performed in real time. It should also be noted that the systems and/or methods described above may be applied to, or used in accordance with, other systems and/or methods.

## Claims

1. A system for facilitating controlled viewing experiences for users of virtual reality or augmented reality headsets using thick and thin client devices in a client/server architecture, the system comprising:
an accessory (604) having an exterior housing, wherein the accessory (604) is configured to change from an open state to a closed state;
an interior surface located within the exterior housing, wherein the interior surface includes a first concave opening for receiving a virtual reality or augmented reality headset (602) while the accessory (604) is in the closed state and from which the virtual reality or augmented reality headset (602) is accessible while the accessory (604) is in the open state;
a communication component, located in control circuitry of the accessory (604), adapted to facilitate wireless Internet communications between the virtual reality or augmented reality headset (602) and a remote server, wherein the communication component is adapted to indicate an address associated with the virtual reality or augmented reality headset (602);
a power source, located in the control circuitry of the accessory (604), adapted to power the virtual reality or augmented reality headset (602) and an ancillary device (608) while the accessory (604) is in the closed state;
a power management component, located in the accessory (604), adapted to manage the powering of the virtual reality or augmented reality headset (602) and the ancillary device (608) while the accessory (604) is in the closed state, wherein the communication component, power source, and power management component are positioned between the exterior housing and the interior surface while the accessory (604) is in both the open state and the closed state; and
the ancillary device (608) that is wirelessly connected to the communication component and adapted to allow the user to monitor the shared content displayed to another user by the virtual reality or augmented reality headset (602) and adapted to allow the user to control's the shared content displayed by the virtual reality or augmented reality headset, and wherein the address is further associated with the ancillary device.

2. The system of claim 1, further comprising:
a second accessory housing:
a second communication component for facilitating wireless Internet communications between a second virtual reality or augmented reality headset (602) and the remote server, wherein the second communication component being adapted to indicate a second address associated with the second virtual reality or augmented reality headset (602);
a second power source adapted to power the second virtual reality or augmented reality headset (602); and
a second power management component adapted to manage the powering of the second virtual reality or augmented reality headset (602).

3. The system of claim 1, wherein the interior surface includes a second concave opening for receiving a handle attachment for the virtual reality or augmented reality headset (602) while the accessory (604) is in the closed state and from which the handle attachment is accessible while the accessory (604) is in the open state.

4. The system of claim 1, wherein the communication component and the power management component are included on a single circuit board.

5. The system of claim 1, wherein the power source for powering the virtual reality or augmented reality headset (602) while the accessory (604) is in the closed state comprises inductive charging adapted to wirelessly transfer power through the interior surface.

6. The system of claim 1, further comprising:
a first user input interface implemented on the virtual reality or augmented reality headset (602), wherein the first user input interface is adapted to use a first type of interaction and is adapted to feature a first menu interface for accessing the shared content, and wherein the virtual reality or augmented reality headset (602) is adapted to use a first operating system; and
a second user input interface implemented on the ancillary device (608), wherein the second user input interface is adapted to use a second type of interaction and is adapted to feature a second menu interface for accessing the shared content, and wherein the ancillary device (608) is adapted to use a second operating system.

7. The system of claim 1, wherein the exterior housing includes an I/O port adapted to transfer power or data to the communication component or the power management component.

8. The system of claim 1, wherein the accessory includes a top portion and a bottom portion connected by a first hinge, and wherein the accessory (604) is adapted to change from the open state to the closed state by rotating the top portion using the first hinge.

9. The system of claim 8, further comprising:
a first separator located between the top portion and the bottom portion that is rotatable along the first hinge, wherein the first separator includes a binding for storing the ancillary device (608); and
a second separator that is rotatable along a second hinge, wherein the second separator includes a protrusion that contacts the virtual reality or augmented reality headset (602) while the accessory (604) is in the closed state.

10. A method for facilitating controlled viewing experiences for users of virtual reality or augmented reality headsets using thick and thin client devices in a client/server architecture, the method comprising:
receiving, from a remote server over a wireless Internet communication, shared content at a communication component located in control circuitry of an accessory, wherein the accessory is configured to change from an open state to a closed state, and wherein the communication component indicates an address associated with a virtual reality or augmented reality headset (602);
powering the virtual reality or augmented reality headset (602) using a power source and a power management component located in the control circuitry of the accessory (604), wherein the communication component, power source, and power management component are positioned between an exterior housing of the accessory and an interior surface of the accessory while the accessory is in both the open state and the closed state, and wherein the interior surface is located within the exterior housing and includes a first concave opening for receiving the virtual reality or augmented reality headset (602) while the accessory is in the closed state and from which the virtual reality or augmented reality headset (602) is accessible while the accessory is in the open state;
wirelessly transferring the shared content from the communication component to the virtual reality or augmented reality headset (602) and the ancillary device (608), wherein the ancillary device (608) is wirelessly connected to the communication component, wherein the ancillary device (608) allows a user to monitor the shared content displayed to another user by the virtual reality or augmented reality headset (602) and through which the user may control the shared content displayed by the virtual reality or augmented reality headset, and wherein the address is further associated with the ancillary device (608); and
generating for display, at the virtual reality or augmented reality headset (602) and the ancillary device (608), the shared content.

11. The method of claim 10, wherein the interior surface includes a second concave opening for receiving a handle attachment for the virtual reality or augmented reality headset (602) while the accessory (604) is in the closed state and from which the handle attachment is accessible while the accessory is in the open state.

12. The method of claim 11, wherein the communication component and the power management component are included on a single circuit board.

13. The method of claim 10, wherein powering, or charging the virtual reality or augmented reality headset (602) using the power source and the power management component comprises inductive charging or fixed cable charging.

14. The method of claim 10, further comprising:
generating for display a first user input interface implemented on the virtual reality or augmented reality headset (602), wherein the first user input interface uses a first type of interaction and features a first menu interface for accessing the shared content, and wherein the virtual reality or augmented reality headset (602) uses a first operating system; and
generating for display a second user input interface implemented on the ancillary device(608), wherein the second user input interface uses a second type of interaction and features a second menu interface for accessing the shared content, and wherein the ancillary device (608) uses a second operating system.

## Patentansprüche

1. System zum Erleichtern der gesteuerten Betrachtungserfahrung für Benutzer von Virtual-Reality- oder Augmented-Reality-Headsets unter Verwendung von Thick- und Thin-Client-Vorrichtungen in einer Client/Server-Architektur, wobei das System Folgendes umfasst:
ein Zubehörteil (604), das ein Außengehäuse aufweist, wobei das Zubehörteil (604) dazu konfiguriert ist, aus einem geöffneten Zustand in einen geschlossenen Zustand zu wechseln;
eine Innenfläche, die sich innerhalb des Außengehäuses befindet, wobei die Innenfläche eine erste konkave Öffnung zum Aufnehmen eines Virtual-Reality- oder Augmented-Reality-Headsets (602), während sich das Zubehörteil (604) im geschlossenen Zustand befindet, und von der aus das Virtual-Reality- oder Augmented-Reality-Headset (602) zugänglich ist, während sich das Zubehörteil (604) im geöffneten Zustand befindet, beinhaltet;
eine Kommunikationskomponente, die sich in Steuerschaltungen des Zubehörteils (604) befindet und die dazu ausgelegt ist, drahtlose Internetkommunikation zwischen dem Virtual-Reality- oder Augmented-Reality-Headset (602) und einem Remote-Server zu erleichtern, wobei die Kommunikationskomponente dazu ausgelegt ist, eine Adresse anzugeben, die dem Virtual-Reality- oder Augmented-Reality-Headset (602) zugeordnet ist;
eine Leistungsquelle, die sich in den Steuerschaltungen des Zubehörteils (604) befindet und die dazu ausgelegt ist, das Virtual-Reality- oder Augmented-Reality-Headset (602) und eine Zusatzvorrichtung (608) mit Leistung zu versorgen, während sich das Zubehörteil (604) im geschlossenen Zustand befindet;
eine Leistungsverwaltungskomponente, die sich in dem Zubehörteil (604) befindet und die dazu ausgelegt ist, das Versorgen des Virtual-Reality- oder Augmented-Reality-Headsets (602) und der Zusatzvorrichtung (608) mit Leistung zu verwalten, während sich das Zubehörteil (604) im geschlossenen Zustand befindet, wobei die Kommunikationskomponente, die Leistungsquelle und die Leistungsverwaltungskomponente zwischen dem Außengehäuse und der Innenoberfläche positioniert sind, während sich das Zubehörteil (604) sowohl im geöffneten Zustand als auch im geschlossenen Zustand befindet; und
die Zusatzvorrichtung (608), die drahtlos mit der Kommunikationskomponente verbunden ist und dazu ausgelegt ist, es dem Benutzer zu ermöglichen, den gemeinsam genutzten Inhalt zu überwachen, der einem anderen Benutzer durch das Virtual-Reality- oder Augmented-Reality-Headset (602) angezeigt wird, und die dazu ausgelegt ist, es dem Benutzer zu ermöglichen, den gemeinsam genutzten Inhalt zu steuern, der durch das Virtual-Reality- oder Augmented-Reality-Headset angezeigt wird, und wobei die Adresse ferner der Zusatzvorrichtung zugeordnet ist.

2. System nach Anspruch 1, ferner umfassend:
ein zweites Zubehörteilgehäuse:
eine zweite Kommunikationskomponente zum Erleichtern von drahtloser Internetkommunikation zwischen einem zweiten Virtual-Reality- oder Augmented-Reality-Headset (602) und dem Remote-Server, wobei die zweite Kommunikationskomponente dazu ausgelegt ist, eine zweite Adresse anzugeben, die dem zweiten Virtual-Reality- oder Augmented-Reality-Headset (602) zugeordnet ist;
eine zweite Leistungsquelle, die dazu ausgelegt ist, das zweite Virtual-Reality- oder Augmented-Reality-Headset (602) mit Leistung zu versorgen; und
eine zweite Leistungsverwaltungskomponente, die dazu ausgelegt ist, das Versorgen des zweiten Virtual-Reality- oder Augmented-Reality-Headsets (602) mit Leistung zu verwalten.

3. System nach Anspruch 1, wobei die Innenfläche eine zweite konkave Öffnung zum Aufnehmen eines Griffzusatzteils für das Virtual-Reality- oder Augmented-Reality-Headset (602), während sich das Zubehörteil (604) im geschlossenen Zustand befindet, und von der aus die Griffbefestigung zugänglich ist, während sich das Zubehörteil (604) im geöffneten Zustand befindet, beinhaltet.

4. System nach Anspruch 1, wobei die Kommunikationskomponente und die Leistungsverwaltungskomponente auf einer einzigen Leiterplatte beinhaltet sind.

5. System nach Anspruch 1, wobei die Leistungsquelle zum Versorgen des Virtual-Reality- oder Augmented-Reality-Headsets (602) mit Leistung, während sich das Zubehörteil (604) im geschlossenen Zustand befindet, eine induktive Aufladung umfasst, die dazu ausgelegt ist, Leistung drahtlos durch die Innenfläche zu übertragen.

6. System nach Anspruch 1, ferner umfassend:
eine erste Benutzereingabeschnittstelle, die auf dem Virtual-Reality- oder Augmented-Reality-Headset (602) implementiert ist, wobei die erste Benutzereingabeschnittstelle dazu ausgelegt ist, eine erste Art von Interaktion zu verwenden, und dazu ausgelegt ist, eine erste Menüschnittstelle zum Zugreifen auf den gemeinsam genutzten Inhalt aufzuweisen, und wobei das Virtual-Reality- oder Augmented-Reality-Headset (602) dazu ausgelegt ist, ein erstes Betriebssystem zu verwenden; und
eine zweite Benutzereingabeschnittstelle, die auf der Zusatzvorrichtung (608) implementiert ist, wobei die zweite Benutzereingabeschnittstelle dazu ausgelegt ist, eine zweite Art von Interaktion zu verwenden, und dazu ausgelegt ist, eine zweite Menüschnittstelle zum Zugreifen auf den gemeinsam genutzten Inhalt aufzuweisen, und wobei die Zusatzvorrichtung (608) dazu ausgelegt ist, ein zweites Betriebssystem zu verwenden.

7. System nach Anspruch 1, wobei das Außengehäuse einen E/A-Anschluss beinhaltet, der dazu ausgelegt ist, Leistung oder Daten an die Kommunikationskomponente oder die Leistungsverwaltungskomponente zu übertragen.

8. System nach Anspruch 1, wobei das Zubehörteil einen oberen Abschnitt und einen unteren Abschnitt beinhaltet, die durch ein erstes Scharnier verbunden sind, und wobei das Zubehörteil (604) dazu ausgelegt ist, durch Drehen des oberen Abschnitts unter Verwendung des ersten Scharniers aus dem geöffneten Zustand in den geschlossenen Zustand zu wechseln.

9. System nach Anspruch 8, ferner umfassend:
ein erstes Trennelement, das sich zwischen dem oberen Abschnitt und dem unteren Abschnitt befindet und entlang des ersten Scharniers drehbar ist, wobei das erste Trennelement eine Einfassung zum Aufbewahren der Zusatzvorrichtung (608) beinhaltet; und
ein zweites Trennelement, das entlang eines zweiten Scharniers drehbar ist, wobei das zweite Trennelement einen Vorsprung beinhaltet, der das Virtual-Reality- oder Augmented-Reality-Headset (602) berührt, während sich das Zubehörteil (604) im geschlossenen Zustand befindet.

10. Verfahren zum Erleichtern der gesteuerten Betrachtungserfahrung für Benutzer von Virtual-Reality- oder Augmented-Reality-Headsets unter Verwendung von Thick- und Thin-Client-Vorrichtungen in einer Client/Server-Architektur, wobei das Verfahren Folgendes umfasst:
Empfangen, von einem Remote-Server über eine drahtlose Internetkommunikation, von gemeinsam genutztem Inhalt an einer Kommunikationskomponente, die sich in Steuerschaltungen eines Zubehörteils befindet, wobei das Zubehörteil dazu konfiguriert ist, aus einem geöffneten Zustand in einen geschlossenen Zustand zu wechseln, und wobei die Kommunikationskomponente eine Adresse angibt, die einem Virtual-Reality- oder Augmented-Reality-Headset (602) zugeordnet ist;
Versorgen des Virtual-Reality- oder Augmented-Reality-Headsets (602) mit Leistung unter Verwendung einer Leistungsquelle und einer Leistungsverwaltungskomponente, die sich in den Steuerschaltungen des Zubehörteils (604) befindet, wobei die Kommunikationskomponente, die Leistungsquelle und die Leistungsverwaltungskomponente zwischen einem Außengehäuse des Zubehörteils und einer Innenfläche des Zubehörteils positioniert sind, während sich das Zubehörteil sowohl im geöffneten Zustand als auch im geschlossenen Zustand befindet, und wobei sich die Innenfläche innerhalb des Außengehäuses befindet und eine erste konkave Öffnung zum Aufnehmen des Virtual-Reality- oder Augmented-Reality-Headsets (602), während sich das Zubehörteil im geschlossenen Zustand befindet, und von der aus das Virtual-Reality- oder Augmented-Reality-Headset (602) zugänglich ist, während sich das Zubehörteil im offenen Zustand befindet, beinhaltet;
drahtloses Übertragen des gemeinsam genutzten Inhalts von der Kommunikationskomponente zu dem Virtual-Reality- oder Augmented-Reality-Headset (602) und der Zusatzvorrichtung (608), wobei die Zusatzvorrichtung (608) drahtlos mit der Kommunikationskomponente verbunden ist, wobei die Zusatzvorrichtung (608) es einem Benutzer ermöglicht, den gemeinsam genutzten Inhalt zu überwachen, der einem anderen Benutzer durch das Virtual-Reality- oder Augmented-Reality-Headset (602) angezeigt wird, und durch die der Benutzer den gemeinsam genutzten Inhalt steuern kann, der durch das Virtual-Reality- oder Augmented-Reality-Headset angezeigt wird, und wobei die Adresse ferner der Zusatzvorrichtung (608) zugeordnet ist; und
Erzeugen des gemeinsam genutzten Inhalts zur Anzeige an dem Virtual-Reality- oder Augmented-Reality-Headset (602) und der Zusatzvorrichtung (608).

11. Verfahren nach Anspruch 10, wobei die Innenfläche eine zweite konkave Öffnung zum Aufnehmen eines Griffzusatzteils für das Virtual-Reality- oder Augmented-Reality-Headset (602), während sich das Zubehörteil (604) im geschlossenen Zustand befindet, und von der aus die Griffbefestigung zugänglich ist, während sich das Zubehörteil im geöffneten Zustand befindet, beinhaltet.

12. Verfahren nach Anspruch 11, wobei die Kommunikationskomponente und die Leistungsverwaltungskomponente auf einer einzigen Leiterplatte beinhaltet sind.

13. Verfahren nach Anspruch 10, wobei das Versorgen mit Leistung oder das Laden des Virtual-Reality- oder Augmented-Reality-Headsets (602) unter Verwendung der Leistungsquelle und der Leistungsmanagementkomponente induktives Laden oder Laden mit festem Kabel umfasst.

14. Verfahren nach Anspruch 10, ferner umfassend:
Erzeugen einer ersten Benutzereingabeschnittstelle zur Anzeige, die auf dem Virtual-Reality- oder Augmented-Reality-Headset (602) implementiert ist, wobei die erste Benutzereingabeschnittstelle eine erste Art der Interaktion verwendet und eine erste Menüschnittstelle zum Zugreifen auf den gemeinsam genutzten Inhalt aufweist, und wobei das Virtual-Reality- oder Augmented-Reality-Headset (602) ein erstes Betriebssystem verwendet; und
Erzeugen einer zweite Benutzereingabeschnittstelle zur Anzeige, die auf der Zusatzvorrichtung (608) implementiert ist, wobei die zweite Benutzereingabeschnittstelle eine zweite Art von Interaktion verwendet, und eine zweite Menüschnittstelle zum Zugreifen auf den gemeinsam genutzten Inhalt aufweist, und wobei die Zusatzvorrichtung (608) ein zweites Betriebssystem verwendet.

## Revendications

1. Système permettant de faciliter des expériences de visualisation contrôlées pour des utilisateurs de casques de réalité virtuelle ou de réalité augmentée utilisant des dispositifs clients lourds et légers dans une architecture client/serveur, le système comprenant :
un accessoire (604) ayant un boîtier extérieur, dans lequel l'accessoire (604) est configuré pour passer d'un état ouvert à un état fermé ;
une surface intérieure située dans le boîtier extérieur, dans lequel la surface intérieure comprend une première ouverture concave pour recevoir un casque de réalité virtuelle ou de réalité augmentée (602) lorsque l'accessoire (604) est à l'état fermé et à partir de laquelle le casque de réalité virtuelle ou de réalité augmentée (602) est accessible lorsque l'accessoire (604) est à l'état ouvert ;
un composant de communication, situé dans des circuits de commande de l'accessoire (604), adapté pour faciliter des communications Internet sans fil entre le casque de réalité virtuelle ou de réalité augmentée (602) et un serveur distant, dans lequel le composant de communication est adapté pour indiquer une adresse associée au casque de réalité virtuelle ou de réalité augmentée (602) ;
une source d'alimentation, située dans les circuits de commande de l'accessoire (604), adaptée pour alimenter le casque de réalité virtuelle ou de réalité augmentée (602) et un dispositif auxiliaire (608) lorsque l'accessoire (604) est à l'état fermé ;
un composant de gestion d'alimentation, situé dans l'accessoire (604), adapté pour gérer l'alimentation du casque de réalité virtuelle ou de réalité augmentée (602) et du dispositif auxiliaire (608) lorsque l'accessoire (604) est à l'état fermé, dans lequel le composant de communication, la source d'alimentation et le composant de gestion d'alimentation sont positionnés entre le boîtier extérieur et la surface intérieure lorsque l'accessoire (604) est à la fois à l'état ouvert et à l'état fermé ; et
le dispositif auxiliaire (608) qui est connecté sans fil au composant de communication et adapté pour permettre à l'utilisateur de surveiller le contenu partagé affiché à un autre utilisateur par le casque de réalité virtuelle ou de réalité augmentée (602) et adapté pour permettre à l'utilisateur de commander le contenu partagé affiché par le casque de réalité virtuelle ou de réalité augmentée, et dans lequel l'adresse est en outre associée au dispositif auxiliaire.

2. Système selon la revendication 1, comprenant également :
Un second boîtier d'accessoire :
un second composant de communication pour faciliter des communications Internet sans fil entre un second casque de réalité virtuelle ou de réalité augmentée (602) et le serveur distant, dans lequel le second composant de communication est adapté pour indiquer une seconde adresse associée au second casque de réalité virtuelle ou de réalité augmentée (602) ;
une seconde source d'alimentation adaptée pour alimenter le second casque de réalité virtuelle ou de réalité augmentée (602) ; et
un second composant de gestion d'alimentation adapté pour gérer l'alimentation du second casque de réalité virtuelle ou de réalité augmentée (602).

3. Système selon la revendication 1, dans lequel la surface intérieure comprend une seconde ouverture concave pour recevoir une fixation de poignée pour le casque de réalité virtuelle ou de réalité augmentée (602) lorsque l'accessoire (604) est à l'état fermé et à partir de laquelle la fixation de poignée est accessible lorsque l'accessoire (604) est à l'état ouvert.

4. Système selon la revendication 1, dans lequel le composant de communication et le composant de gestion d'alimentation sont compris sur une seule carte de circuit imprimé.

5. Système selon la revendication 1, dans lequel la source d'alimentation du casque de réalité virtuelle ou de réalité augmentée (602), lorsque l'accessoire (604) est à l'état fermé, comprend une charge inductive adaptée pour transférer sans fil une puissance à travers la surface intérieure.

6. Système selon la revendication 1, comprenant également :
une première interface d'entrée utilisateur mise en œuvre sur le casque de réalité virtuelle ou de réalité augmentée (602), dans lequel la première interface d'entrée utilisateur est adaptée pour utiliser un premier type d'interaction et est adaptée pour présenter une première interface de menu pour accéder au contenu partagé, et dans lequel le casque de réalité virtuelle ou de réalité augmentée (602) est adapté pour utiliser un premier système d'exploitation ; et
une seconde interface d'entrée utilisateur mise en œuvre sur le dispositif auxiliaire (608), dans lequel la seconde interface d'entrée utilisateur est adaptée pour utiliser un second type d'interaction et est adaptée pour présenter une seconde interface de menu pour accéder au contenu partagé, et dans lequel le dispositif auxiliaire (608) est adapté pour utiliser un second système d'exploitation.

7. Système selon la revendication 1, dans lequel le boîtier extérieur comprend un port d'entrée/sortie (E/S) adapté pour transférer une puissance ou des données au composant de communication ou au composant de gestion d'alimentation.

8. Système selon la revendication 1, dans lequel l'accessoire comprend une partie supérieure et une partie inférieure reliées par une première charnière, et dans lequel l'accessoire (604) est adapté pour passer de l'état ouvert à l'état fermé par rotation de la partie supérieure à l'aide de la première charnière.

9. Système selon la revendication 8, comprenant également :
un premier séparateur situé entre la partie supérieure et la partie inférieure qui peut tourner le long de la première charnière, dans lequel le premier séparateur comprend une liaison pour stocker le dispositif auxiliaire (608) ; et
un second séparateur qui peut tourner le long d'une seconde charnière, dans lequel le second séparateur comprend une saillie qui vient en contact avec le casque de réalité virtuelle ou de réalité augmentée (602) lorsque l'accessoire (604) est à l'état fermé.

10. Procédé permettant de faciliter des expériences de visualisation contrôlées pour des utilisateurs de casques de réalité virtuelle ou de réalité augmentée utilisant des dispositifs clients lourds et légers dans une architecture client/serveur, le procédé comprenant :
la réception, d'un serveur distant sur une communication Internet sans fil, d'un contenu partagé au niveau d'un composant de communication situé dans des circuits de commande d'un accessoire, dans lequel l'accessoire est configuré pour passer d'un état ouvert à un état fermé, et dans lequel le composant de communication indique une adresse associée à un casque de réalité virtuelle ou de réalité augmentée (602) ;
l'alimentation du casque de réalité virtuelle ou de réalité augmentée (602) à l'aide d'une source d'alimentation et d'un composant de gestion d'alimentation situés dans les circuits de commande de l'accessoire (604), dans lequel le composant de communication, la source d'alimentation et le composant de gestion d'alimentation sont positionnés entre un boîtier extérieur de l'accessoire et une surface intérieure de l'accessoire lorsque l'accessoire est à la fois à l'état ouvert et à l'état fermé, et dans lequel la surface intérieure est située dans le boîtier extérieur et comprend une première ouverture concave pour recevoir le casque de réalité virtuelle ou de réalité augmentée (602) lorsque l'accessoire est à l'état fermé et à partir de laquelle le casque de réalité virtuelle ou de réalité augmentée (602) est accessible lorsque l'accessoire est à l'état ouvert ;
le transfert sans fil du contenu partagé du composant de communication au casque de réalité virtuelle ou de réalité augmentée (602) et au dispositif auxiliaire (608), dans lequel le dispositif auxiliaire (608) est connecté sans fil au composant de communication, dans lequel le dispositif auxiliaire (608) permet à un utilisateur de surveiller le contenu partagé affiché à un autre utilisateur par le casque de réalité virtuelle ou de réalité augmentée (602) et par l'intermédiaire duquel l'utilisateur peut commander le contenu partagé affiché par le casque de réalité virtuelle ou de réalité augmentée, et dans lequel l'adresse est en outre associée au dispositif auxiliaire (608) ; et
la génération pour affichage, au niveau du casque de réalité virtuelle ou de réalité augmentée (602) et du dispositif auxiliaire (608), du contenu partagé.

11. Procédé selon la revendication 10, dans lequel la surface intérieure comprend une seconde ouverture concave pour recevoir une fixation de poignée pour le casque de réalité virtuelle ou de réalité augmentée (602) lorsque l'accessoire (604) est à l'état fermé et à partir de laquelle la fixation de poignée est accessible lorsque l'accessoire est à l'état ouvert.

12. Procédé selon la revendication 11, dans lequel le composant de communication et le composant de gestion d'alimentation sont compris sur une seule carte de circuit imprimé.

13. Procédé selon la revendication 10, dans lequel l'alimentation ou la charge du casque de réalité virtuelle ou de réalité augmentée (602) à l'aide de la source d'alimentation et du composant de gestion d'alimentation comprend une charge inductive ou une charge fixe par câble.

14. Procédé selon la revendication 10, comprenant également :
la génération pour affichage d'une première interface d'entrée utilisateur mise en œuvre sur le casque de réalité virtuelle ou de réalité augmentée (602), dans lequel la première interface d'entrée utilisateur est un premier type d'interaction et présente une première interface de menu pour accéder au contenu partagé, et dans lequel le casque de réalité virtuelle ou de réalité augmentée (602) utilise un premier système d'exploitation ; et
la génération pour affichage d'une seconde interface d'entrée utilisateur mise en œuvre sur le dispositif auxiliaire (608), dans lequel la seconde interface d'entrée utilisateur utilise un second type d'interaction et présente une seconde interface de menu pour accéder au contenu partagé, et dans lequel le dispositif auxiliaire (608) utilise un second système d'exploitation.
